# EUROPÄISCHE PATENTSCHRIFT

(11) **EP 4 186 610 B1**
(45) Veröffentlichungstag und Bekanntmachung des Hinweises auf die Patenterteilung: **04.09.2024**
(21) Anmeldenummer: 22208530.0
(22) Anmeldetag: 21.11.2022
(51) Int. Cl.: B21D 19/04, B21D 39/02, B21D 5/16, B25J 11/00

(54) **ROLLFALZKOPF ZUM BEFESTIGEN AN EINEM ROBOTERARM UND SYSTEM UMFASSEND EINEN ROLLFALZKOPF UND EINEN ROBOTER MIT EINEM ROBOTERARM**
ROLLER FOLDING HEAD FOR FIXING TO A ROBOT ARM AND SYSTEM COMPRISING A ROLLER FOLDING HEAD AND A ROBOT COMPRISING A ROBOT ARM
TÊTE DE PLIAGE À ROULEAUX DESTINÉE À ÊTRE FIXÉE À UN BRAS DE ROBOT ET SYSTÈME COMPRENANT UNE TÊTE DE PLIAGE À ROULEAUX ET UN ROBOT DOTÉ D'UN BRAS DE ROBOT

(30) Priorität: 25.11.2021 DE 102021130973
(43) Veröffentlichungstag der Anmeldung: 31.05.2023
(73) Patentinhaber: Ebz Systec GmbH, 88212 Ravensburg (DE)
(72) Erfinder: STADLER, Rainer, 88605 Rast (DE); KÜHNER, Benjamin, 88484 Gutenzell (DE)
(74) Vertreter: Otten, Roth, Dobler & Partner mbB Patentanwälte

(56) Entgegenhaltungen:
- DE-A1- 3 902 979
- DE-U1- 202015 102 477
- KR-B1- 100 965 757
- US-A1- 2014 196 516
- US-B2- 10 799 932
- US-B2- 7 500 373

## Beschreibung

Die Erfindung betrifft einen Rollfalzkopf zum Befestigen an einem Roboterarm, ein System umfassend einen Rollfalzkopf und einen Roboter mit einem Roboterarm sowie ein Verfahren zum Betrieb eines Systems gemäß dem Oberbegriff des Anspruchs 1 bzw. 8 bzw. 9.

Aus der EP 1 420 908 B1 ist ein Rollfalzkopf zum Befestigen an einem Roboterarm bekannt, wobei der Rollfalzkopf einen Grundkörper und wenigstens zwei Rollenpaare umfasst, wobei jedes der wenigstens zwei Rollenpaare aus einer Andrück- und einer Gegenrolle besteht, die zusammenwirken, um einen Flansch entlang einer Falzlinie um einen bestimmten Winkel zu biegen, und wobei der Rollfalzkopf einen an dem Grundkörper verfahrbaren Schlitten umfasst, wobei die Andrückrollen drehbar am Schlitten gelagert sind.

DE 20 2015 102477 U1, die die Basis für den Oberbegriff des Anspruchs 1 bildet, offenbart einen Rollfalzkopf zum Befestigen an einem Roboterarm.

Es ist Aufgabe der Erfindung, einen Rollfalzkopf zum Befestigen an einem Roboterarm vorzuschlagen, welcher kompakt aufgebaut und belastbar ist. Weiterhin ist es Aufgabe der Erfindung ein System vorzuschlagen, welches einen Rollfalzkopf und einen Roboter mit einem Roboterarm umfasst und kompakt aufgebaut und belastbar ist. Schließlich ist es Aufgabe der Erfindung, ein Verfahren zum Betrieb eines Systems vorzuschlagen, durch welches die Qualität der hergestellten Werkstücke überwachbar und/oder verbesserbar ist.

Diese Aufgabe wird ausgehend von den Merkmalen des Oberbegriffs des Anspruchs 1 bzw. 8 bzw. 9 durch die kennzeichnenden Merkmale des Anspruchs 1 bzw. 8 bzw. 9 gelöst. In den Unteransprüchen sind vorteilhafte und zweckmäßige Weiterbildungen angegeben.

Der erfindungsgemäße Rollfalzkopf zum Befestigen an einem Roboterarm umfasst einen Grundkörper, eine erste Werkzeughälfte, eine zweite Werkzeughälfte, einen Schlitten, eine Linearführung, einen Verschiebeantrieb und einen Drehantrieb, wobei die erste Werkzeughälfte einen Revolverkopf und wenigstens zwei Andrückrollen umfasst, wobei die Andrückrollen jeweils um ihre Längsachse drehbar an dem Revolverkopf gelagert sind, wobei die zweite Werkzeughälfte einen Lagerbock und wenigstens eine Gegenrolle umfasst, wobei die wenigstens eine Gegenrolle um ihre Längsachse drehbar an dem Lagerbock gelagert ist, wobei jeweils eine Andrückrolle und eine Gegenrolle derart aufeinander ausgerichtet sind, dass ein Rollenpaar für eine Falzbearbeitung gebildet ist, wobei der Revolverkopf an dem Schlitten um eine Drehachse drehbar gelagert ist, wobei der Drehantrieb an dem Schlitten gelagert ist, wobei der Revolverkopf von dem Drehantrieb gegenüber dem Schlitten um seine Drehachse verdrehbar ist und wobei der Schlitten an dem Grundkörper über die Linearführung von dem Verschiebeantrieb in Richtung der Drehachse des Revolverkopfes derart verschiebbar geführt ist, dass in einer ersten Verschiebestellung des Revolverkopfes das Rollenpaar für die Falzbearbeitung gebildet ist und dass in einer zweiten Verschiebestellung des Revolverkopfes die Andrückrolle des Rollenpaars auf Abstand zu der Gegenrolle steht. Durch einen derartigen Aufbau sind alle notwendigen Verschiebe- und Verdrehbewegungen mittels einem einzigen Schlitten ausführbar, so dass an dem Grundkörper keine weiteren aktiv drehbaren oder aktiv verschiebbaren Komponenten angeordnet werden müssen. Hierdurch ist sowohl ein kompakter als auch ein belastbarer Aufbau gewährleistet.

Weiterhin ist es vorgesehen, den Rollfalzkopf mit einer Drehmomentstütze auszustatten, wobei die Drehmomentstütze derart ausgebildet ist, dass der Revolverkopf in der ersten Verschiebestellung an dem Grundkörper abgestützt ist und dass der Revolverkopf in der zweiten Verschiebstellung frei gegenüber dem Grundköper verdrehbar ist. Hierdurch ist über die zur Freigabe des Werkstücks notwendige Verschiebbarkeit des Revolverkopfes gegenüber dem Grundkörper auch ein Aktivieren und Deaktivieren der Drehmomentstütze realisiert, so dass gleichzeitig mit der Freigabe des Werkstücks auch das Verdrehen des Revolverkopfes ermöglicht ist, wenn eine andere Andrückrolle benötigt wird.

Es ist auch vorgesehen, dass der Revolverkopf in der ersten Verschiebestellung in einer Falzstellung steht, in welcher das Rollenpaar im Betrieb eine Blechumformung ausführt, dass der Revolverkopf in einer zwischen der ersten und der zweiten Verschiebestellung liegenden mittleren Verschiebestellung in einer Aus-/Einfahrstellung steht, in welcher das Rollenpaar ein Werkstück freigibt. Durch diese Zwischenstellung ist es möglich, das Werkstück freizugeben, aber die Drehmomentstützte noch aktiv zu halten, so dass ein ungewünschtes Verdrehen bei der Freigabe zuverlässig vermieden ist.

Weiterhin ist es vorgesehen, die Drehmomentstütze mit einem Sperrelement und einer Aufnahme auszustatten, wobei entweder das Sperrelement an dem Revolverkopf ausgebildet ist und die Aufnahme an dem Grundkörper ausgebildet ist oder das Sperrelement an dem Grundkörper ausgebildet ist und die Aufnahme an dem Revolverkopf ausgebildet ist und wobei sich das Sperrelement und die Aufnahme insbesondere in Richtung der Längsachse des Revolverkopfes erstrecken. Hierdurch lässt sich die Drehmomentstütze einfach durch einen auf eine Bohrung im Sinne eine Gleitpassung angepassten Stift realisieren.

Es ist auch vorgesehen, den Grundkörper mit einem Führungskanal auszustatten und den Schlitten in dem Führungskanal zu führen, wobei der Führungskanal insbesondere als Führungstunnel ausgebildet ist. Durch eine derartige Verbindung von Schlitten und Grundkörper ist es sichergestellt, dass der Schlitten mit geringem Spiel an dem Grundkörper geführt ist und das Kräfte und Momente von dem Schlitten gut auf den Grundkörper übertragen werden können.

Weiterhin ist es vorgesehen, den Rollfalzkopf mit einem Kraftsensor auszustatten, wobei der Kraftsensor derart angeordnet ist, dass dieser eine Falzkraft aufnimmt, mit welcher die Andrückrolle ein Blech eines zu falzenden Bauteils an die Gegenrolle drückt. Hierdurch lässt sich ein Unterschreiten oder Überschreiten der gewünschten Faltkraft überwachen.

Schließlich ist es vorgesehen, den Verschiebeantrieb mit einer Kraftregeleinrichtung auszustatten, wobei die Kraftregeleinrichtung derart ausgebildet ist, dass diese den Verschiebeantrieb auf der Basis der von dem Kraftsensor jeweils gemessenen Falzkraft kontrolliert. Hierdurch kann ein Überschreiten oder ein Unterschreiten der gewünschten Falzkraft vermieden werden.

Das erfindungsgemäße System umfasst einen Rollfalzkopf und einen Roboter mit einem Roboterarm, wobei der Rollfalzkopf an dem Roboterarm befestigt ist und wobei der Rollfalzkopf entsprechend wenigstens einem der Ansprüche 1 bis 7 ausgebildet ist. Das System weist entsprechend einen oder mehrere der zu den Ansprüchen 1 bis 7 genannten Vorteile auf.

Das erfindungsgemäße Verfahren zum Betrieb eines Systems entsprechend dem Anspruch 8 mit einem Rollfalzkopf nach Anspruch 6 oder 7 sieht vor, mittels des Kraftsensors während eines Falzvorgangs wiederholt eine von der aktiven Andrückrolle auf ein zu falzendes Blech ausgeübte Falzkraft zu ermitteln, wobei die jeweils ermittelte Falzkraft auf der Basis einer Verfahrposition des Roboters einer Position an dem zu falzenden Blech zugeordnet wird, so dass ein Wertepaar erzeugt wird, wobei die erzeugten Wertepaare zur Dokumentation und/oder Qualitätskontrolle und/oder Analyse gespeichert werden. Hierdurch lässt sich der Falzprozess lückenlos dokumentieren und kontrollieren und auswerten.

Schließlich ist es vorgesehen, mittels einer Kraftregeleinrichtung den Verschiebeantrieb derart zu kontrollieren, dass das Blech von dem Rollfalzkopf mit einer gleichbleibenden Falzkraft gefalzt wird oder mittels einer Kraftregeleinrichtung den Verschiebeantrieb derart zu kontrollieren, dass abhängig von einer Position des Rollfalzkopfes an dem Blech mit einer für diese Position vorgegebenen Falzkraft auf das Blech eingewirkt wird, wobei es insbesondere vorgesehen ist, dass die Position, welche der Rollfalzkopf zu dem Blech einnimmt, der Kraftregeleinrichtung von dem Roboter mitgeteilt wird. Hierdurch lässt sich eine aktive Regelung der Falzkraft realisieren, was zu Produkten von erhöhter Qualität führt.

Weitere Einzelheiten der Erfindung werden in der Zeichnung anhand von schematisch dargestellten Ausführungsbeispielen beschrieben.

Hierbei zeigt:
- Figur 1:: eine perspektivische Ansicht eines erfindungsgemäßen Rollfalzkopfes;
- Figuren 2-4:: geschnittene Seitenansichten des in der Figur 1 gezeigten Rollfalzkopfes in unterschiedlichen Stellungen des Schlittens und
- Figur 5:: eine schematische Seitenansicht des in den Figuren 1 bis 4 gezeigten Rollfalzkopf bei ausgeblendeter Trommel des Revolverkopfes und mit einem schematisch dargestellten Roboter.

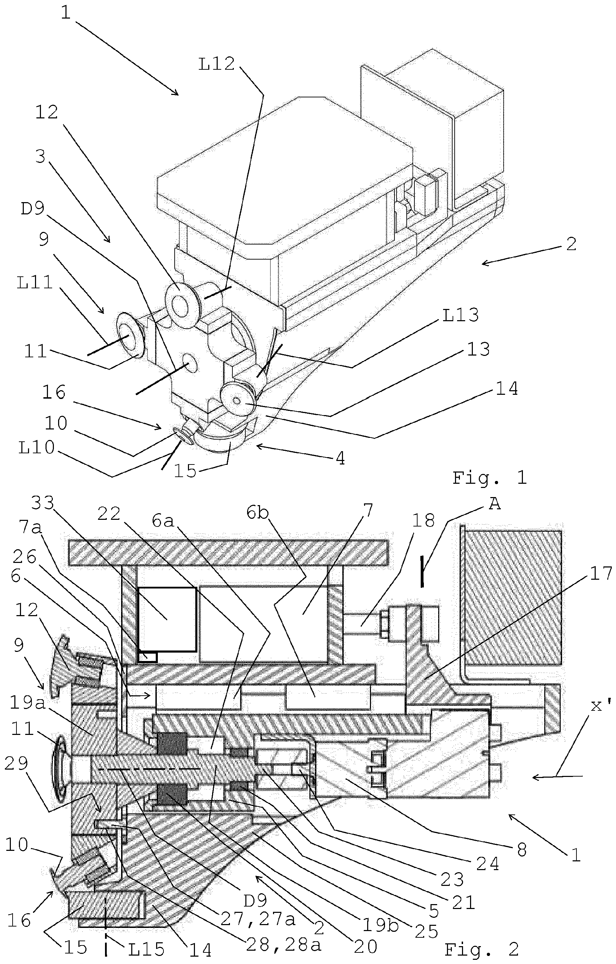

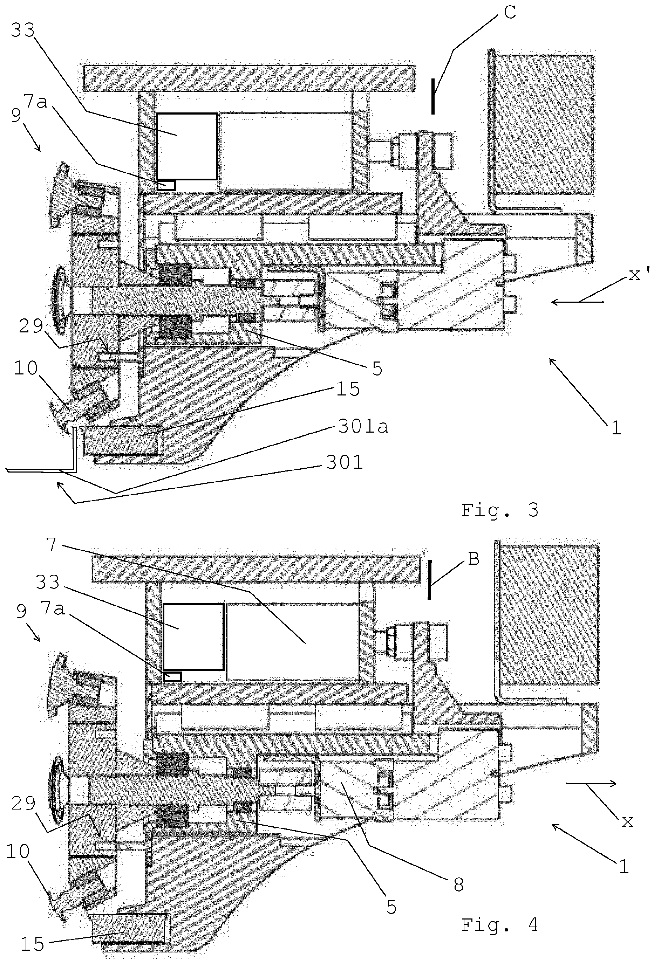

In der Figur 1 ist eine perspektivische Ansicht eines erfindungsgemäßen Rollfalzkopfes 1 gezeigt. Der Rollfalzkopf 1 ist zur Befestigen an einem in der Figur 1 nicht dargestellten Roboterarm eines nicht dargestellten Roboters vorgesehen, um mittels des Roboterarms auf einer vorgegebenen Bahn an einem nur in der Figur 3 exemplarisch und schematisch dargestellten Werkstück 301 entlang geführt zu werden. Das Werkstück 301 umfasst hierbei wenigstens ein Blech 301a, welches von dem Rollfalzkopf 1 gefalzt wird, wobei das Werkstück 301 auf einem nicht dargestellten Falzbett abgestützt sein kann.

Die erwähnte Figur 2 zeigt einen mittig ausgeführten Längsschnitt durch den in der Figur 1 gezeigten Rollfalzkopf 1.

Der Rollfalzkopf 1 umfasst einen Grundkörper 2, eine erste Werkzeughälfte 3, eine zweite Werkzeughälfte 4, einen Schlitten 5 (siehe Figur 2), eine Linearführung 6 (siehe Figur 2), einen Verschiebeantrieb 7 (siehe Figur 2), welcher als Zylinderantrieb oder Linearaktuator ausgebildet sein kann, und einen Drehantrieb 8 (siehe Figur 2).

Die erste Werkzeughälfte 3 umfasst einen Revolverkopf 9 mit vier Andrückrollen 10-13 wobei die Andrückrollen 10-13 jeweils um ihre Längsachse L10-L13 drehbar an dem Revolverkopf 9 gelagert sind.

Die zweite Werkzeughälfte 4 umfasst einen Lagerbock 14 und eine Gegenrolle 15, wobei die Gegenrolle 15 um ihre Längsachse L15 (siehe Figur 2) drehbar an dem Lagerbock 14 gelagert ist.

Die Andrückrolle 10 und die Gegenrolle 15 sind in der Figur 1 derart aufeinander ausgerichtet, dass ein Rollenpaar 16 für eine Falzbearbeitung gebildet ist. Bei der Falzbearbeitung wird das Blech 301a des Werkstücks 301 entlang einer Falzlinie um einen bestimmten Winkel gebogen.

Der Revolverkopf 9 ist an dem Schlitten 5 um eine Drehachse D9 drehbar gelagert. Der Drehantrieb 8 ist an dem Schlitten 5 gelagert. Hierbei ist der Revolverkopf 9 von dem Drehantrieb 8 gegenüber dem Schlitten 5 und gegenüber dem Grundkörper 2 um seine Drehachse D9 verdrehbar. Hierdurch können auch die anderen Andrückrollen 11 bis 13 mit der Gegenrolle 15 Rollenpaare bilden, wenn der Revolverkopf 9 entsprechend verdreht wird.

Der Schlitten 5 ist an dem Grundkörper 3 in der Linearführung 6 des Grundkörpers 3 von dem Verschiebeantrieb 7 in Richtung der Drehachse D9 des Revolverkopfes 9 zwischen einer ersten Verschiebestellung A und einer zweiten Verschiebstellung B bewegbar (vergleiche Figuren 2 und 4) angeordnet. In der ersten Verschiebestellung A des Revolverkopfes 9 (siehe Figur 2) ist aus der Andrückrolle 10 und der Gegenrolle 15 das Rollenpaar 16 für die Falzbearbeitung gebildet, wobei in dieser Stellung das nur in der Figur 3 gezeigte Blech 301a des Werkstücks 301 zwischen der Andrückrolle 10 und der Gegenrolle 15 zur Bearbeitung gegriffen sein kann. Die Andrückrolle 10 und die Gegenrolle 15 stehen dann abhängig von einer Dicke des zu falzenden Blechs 301a z.B. in einem Abstand von etwa 4 mm zueinander. In der zweiten Verschiebstellung B des Revolverkopfes 9 (siehe Figur 4) steht die Andrückrolle 10 mit etwa 30 bis 50 mm auf Abstand zu der Gegenrolle 15, so dass der Rollfalzkopf 1 an ein zu bearbeitendes Werkstück herangefahren werden kann oder von einem zu bearbeitenden Werkstück weggefahren werden kann.

Der Lagerbock 14 ist einteilig mit dem Grundkörper 2 ausgeführt, so dass die Gegenrolle 15 direkt an dem Grundkörper 2 gelagert ist.

Der Drehantrieb 8 für den Revolverkopf 9 ist an dem Schlitten 5 montiert und bewegt sich zusammen mit dem Schlitten 5, wenn dieser von dem Verschiebantrieb 7 aus der in der Figur 2 gezeigten ersten Verschiebstellung A in die in der Figur 4 gezeigte zweite Verschiebstellung B in Pfeilrichtung x` verschoben wird. Zur Ankupplung an den Verschiebeantrieb 7 umfasst der Schlitten 5 eine Mitnehmer 17, welcher mit dem Schlitten 5 fest verbunden ist und an eine Schub- und Zugstange 18 des Verschiebeantriebs 7 angekoppelt ist.

Der Revolverkopf 9 umfasst eine Trommel 19a und eine Welle 19b, wobei die Trommel 19a drehfest mit der Welle 19b verbunden ist. Mit der Welle 19b ist der Revolverkopf 9 über zwei Drehlager 20, 21 in einem Lagerraum 22 des Schlittens 5 gelagert. Mit einem freien Ende 23 ist die Welle 19b drehfest mit einer Antriebswelle 24 des Drehantriebs 8 verbunden.

Der Grundkörper 2 umfasst neben einem Gehäuse 25 eine Blende 26, welche den Lagerraum 22 verschließt, und ein parallel zu der Drehachse D9 ausgerichtetes Sperrelement 27, welches über die Blende 26 hervorsteht und welches als Stift 27a ausgebildet ist.

Das Sperrelement 27 wirkt mit einer in der Trommel 19a des Revolverkopfes 9 ausgebildeten Aufnahme 28 als Drehmomentstütze 29 zusammen, wenn der Schlitten 5 und mit diesem auch der Revolverkopf 9 in der ersten Verschiebestellung A stehen. Die Aufnahme 28 ist als Bohrung 28a ausgebildet. In dieser ersten Verschiebestellung A ist der Stift 27a fast vollständig von der Bohrung 28a aufgenommen, so dass der Drehantrieb 8 blockiert ist und der Revolverkopf 9 von dem Drehantrieb 8 nicht gegenüber dem Grundkörper 2 um die Drehachse D9 verdrehen werden kann.

Wie in den Figuren 2 bis 4 gezeigt kann der Rollfalzkopf 1 optional auch einen Kraftsensor 33 umfassen, wobei der Kraftsensor 33 derart angeordnet ist, dass dieser eine Falzkraft aufnimmt, mit welcher die Andrückrolle 10 im Falzvorgang das Blech 301a des zu falzenden Bauteils 301 an die Gegenrolle 15 drückt. Hierbei ist der Kraftsensor 33 zwischen dem Verschiebantrieb 7 und dem Grundkörper 2 angeordnet, so dass der Verschiebeantrieb 7 sich über den Kraftsensor 33 an dem Grundkörper abstützt. Selbstverständlich kann der Kraftsensor 33 auch an einer anderen geeigneten Stelle zwischen dem Verschiebeantrieb und den Andrückrollen angeordnet sein.

Der Verschiebantrieb 7 umfasst eine Kraftregeleinrichtung 7a. Die Kraftregeleinrichtung 7a ist derart ausgebildet, dass diese den Verschiebeantrieb 7 auf der Basis der von dem Kraftsensor 33 jeweils gemessenen Falzkraft kontrolliert.

In der Figur 3 ist in einer weiteren geschnittenen Seitenansicht eine Zwischenstellung C des Revolverkopfes 9 gezeigt, welche zwischen der ersten Verschiebestellung A und der zweiten Verschiebestellung B liegt. In dieser Zwischenstellung ist der Revolverkopf 9 bereits in Pfeilrichtung x` verschoben, aber erst soweit, dass die Drehmomentstütze 29 noch aktiv ist. In dieser Zwischenstellung C sind die Andrückrolle 10 und die Gegenrolle 15 bereits so weit voneinander beabstandet, dass ein zwischen diesen umgeformtes Werkstück freigegen ist und der Rollfalzkopf 1 von diesem Werkstück wegbewegt werden kann. Allerding ist die Drehmomentstütze 29 - wie erwähnt - noch aktiv, so dass z.B. ein durch eine schnelle Bewegung des Roboters auf den Revolverkopf 9 ausgeübtes Moment den Revolverkopf 9 nicht ungewünscht verdrehen kann.

In der in der Figur 4 gezeigten zweiten Verschiebestellung B ist der Revolverkopf 9 dann nicht mehr durch die Drehmomentstütze 29 blockiert, so dass der Revolverkopf 9 mittels des Drehantriebs 8 z.B. um 90° verdreht werden kann, um aus der Andrückrolle 11 und der Gegenrolle 15 ein weiteres Rollenpaar zu bilden. Um die Drehmomentstütze 29 wieder zu aktivieren wird der Schlitten 5 mittels des Verschiebeantriebs 7 in Pfeilrichtung x zurückgezogen und so wieder in die erste Verschiebestellung A verfahren, welche in der Figur 2 gezeigt ist.

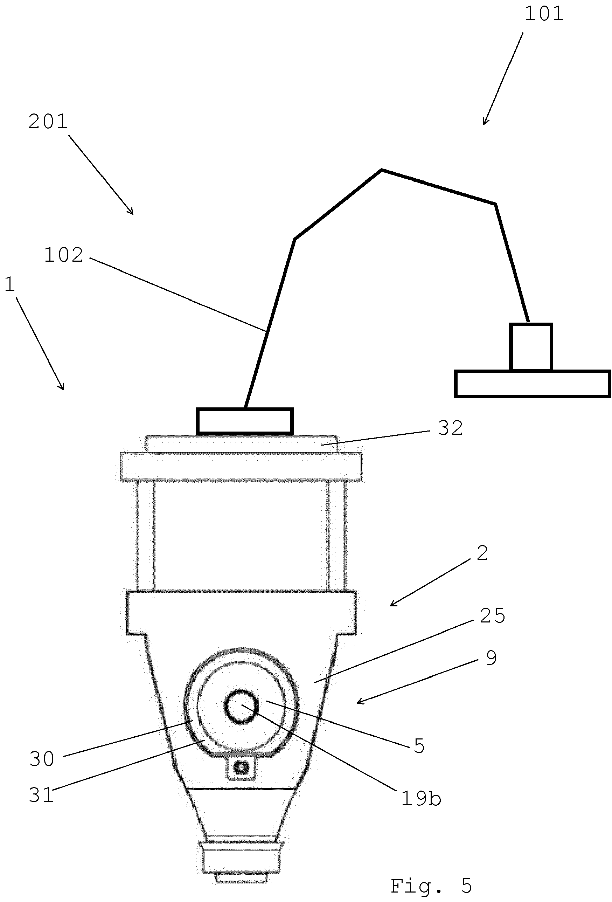

In der Figur 5 ist in Bezug auf die Figuren 2 bis 4 eine Ansicht von links auf den Rollfalzkopf 1 gezeigt, wobei die Trommel 19a des Revolverkopfes 9 in dieser Ansicht ausgeblendet ist. Somit ist von dem Revolverkopf 9 nur die Welle 19b sichtbar. Aus dieser Ansicht ist ein als Führungstunnel 30 ausgebildeter Führungskanal 31 erkennbar, welcher in dem Gehäuse 25 des Grundkörpers 2 zur Aufnahme des Schlittens 5 ausgebildet ist. Hierbei ist der Schlitten 5 - wie es aus den Figuren 2 bis 4 ersichtlich ist - an der Linearführung 6 geführt, welche durch zwei Linearführungselemente 6a, 6b gebildet ist (siehe Figur 2).

Der Grundkörper 2 umfasst auch eine mit seinem Gehäuse 25 verbundene Flanschplatte 32, mit dieser ist der Rollfalzkopf 1 an einem schematisch dargestellten Roboterarm 102 eines schematisch dargestellten Roboters 101 befestigt. Ein erfindungsgemäßes System 201 umfasst den Roboter 101 und den mit dem Roboterarm 102 verbundenen Rollfalzkopf 1.

Im Falzbetrieb kann es vorgesehen sein, dass der Kraftsensor 33 während eines Falzvorgangs wiederholt eine von der aktiven Andrückrolle 10 auf das zu falzende Blech 301a ausgeübte Falzkraft ermittelt, dass die jeweils ermittelte Falzkraft auf der Basis einer Verfahrposition des Roboters 101 einer Position an dem zu falzenden Blech 301a zugeordnet wird, so dass ein Wertepaar erzeugt wird, wobei die erzeugten Wertepaare zur Dokumentation und/oder Qualitätskontrolle und/oder Analyse gespeichert werden.

Im Falzbetrieb kann es weiterhin vorgesehen sein, dass die Kraftregeleinrichtung 7a den Verschiebeantrieb 7 derart kontrolliert, dass das Blech 301a von dem Rollfalzkopf 1 mit einer gleichbleibenden Falzkraft gefalzt wird.

Alternativ kann es im Falzbetrieb vorgesehen sein, dass die Kraftregeleinrichtung 7a den Verschiebeantrieb 7 derart kontrolliert, dass abhängig von einer Position des Rollfalzkopfes 1 an dem Blech 301a mit einer für diese Position vorgegebenen Falzkraft auf das Blech 301a eingewirkt wird, wobei es insbesondere vorgesehen ist, dass die Position, welche der Rollfalzkopf 1 zu dem Blech 301a einnimmt, der Kraftregeleinrichtung von dem Roboter 101 mitgeteilt wird.

### Bezugszeichenliste:

- 1: Rollfalzkopf
- 2: Grundkörper
- 3: erste Werkzeughälfte
- 4: zweite Werkzeughälfte
- 5: Schlitten
- 6: Linearführung
- 6a, 6b: Linearführungselement
- 7: Verschiebeantrieb
- 7a: Kraftregeleinrichtung
- 8: Drehantrieb
- 9: Revolverkopf
- 10, 11, 12, 13: Andrückrolle an 9
- 14: Lagerbock
- 15: Gegenrolle
- 16: Rollenpaar
- 17: Mitnehmer von 5
- 18: Schub- und Zugstange von 7
- 19a: Trommel von 9
- 19b: Welle von 9
- 20, 21: Drehlager
- 22: Lagerraum von 2
- 23: freies Ende von 19b
- 24: Antriebswelle von 8
- 25: Gehäuse von 2
- 26: Blende von 2
- 27: Sperrelement
- 27a: Stift von 2
- 28: Aufnahme
- 28a: Bohrung
- 29: Drehmomentstütze
- 30: Führungstunnel
- 31: Führungskanal
- 32: Flanschplatte
- 33: Kraftsensor

- 101: Roboter
- 102: Roboterarm

- 201: Rollfalzkopf

- 301: Werkstück
- 301a: Blech

- A: erste Verschiebestellung (Figur 2)
- B: zweite Verschiebestellung (Figur 4)
- C: Zwischenstellung zwischen A und B (Figur 3)

- D9: Drehachse von 9
- L10-L13: Längsachse von 10-13
- L15: Längsachse von 15

## Patentansprüche

1. Rollfalzkopf (1) zum Befestigen an einem Roboterarm (102),
- wobei der Rollfalzkopf (1) einen Grundkörper (2), eine erste Werkzeughälfte (3), eine zweite Werkzeughälfte (4), einen Schlitten (5), eine Linearführung (6), einen Verschiebeantrieb (7) und einen Drehantrieb (8) umfasst,
- wobei die erste Werkzeughälfte (3) einen Revolverkopf (9) und wenigstens zwei Andrückrollen (10-13) umfasst,
- wobei die Andrückrollen (10-13) jeweils um ihre Längsachse (L10-L13) drehbar an dem Revolverkopf (9) gelagert sind,
- wobei die zweite Werkzeughälfte (4) einen Lagerbock (14) und wenigstens eine Gegenrolle (15) umfasst,
- wobei die wenigstens eine Gegenrolle (15) um ihre Längsachse (L15) drehbar an dem Lagerbock (14) gelagert ist,
- wobei jeweils eine Andrückrolle (10-13) und eine Gegenrolle (15) derart aufeinander ausgerichtet sind, dass ein Rollenpaar (16) für eine Falzbearbeitung gebildet ist,
- wobei der Revolverkopf (9) an dem Schlitten (5) um eine Drehachse (D9) drehbar gelagert ist,
- wobei der Drehantrieb (8) an dem Schlitten (5) gelagert ist,
- wobei der Revolverkopf (9) von dem Drehantrieb (8) gegenüber dem Schlitten (5) um seine Drehachse (D9) verdrehbar ist,
**dadurch gekennzeichnet,**
- **dass** der Schlitten (5) an dem Grundkörper (2) über die Linearführung (6) von dem Verschiebeantrieb (7) in Richtung der Drehachse (D9) des Revolverkopfes (9) derart verschiebbar geführt ist, dass in einer ersten Verschiebestellung (A) des Revolverkopfes (9) das Rollenpaar (16) für die Falzbearbeitung gebildet ist und dass in einer zweiten Verschiebestellung (B) des Revolverkopfes (9) die Andrückrolle (10-13) des Rollenpaars (16) auf Abstand zu der Gegenrolle (15) steht.

2. Rollfalzkopf nach Anspruch 1, **dadurch gekennzeichnet, dass** der Rollfalzkopf (1) eine Drehmomentstütze (29) umfasst, wobei die Drehmomentstütze (29) derart ausgebildet ist, dass der Revolverkopf (9) in der ersten Verschiebestellung (A) an dem Grundkörper (2) abgestützt ist und dass der Revolverkopf (9) in der zweiten Verschiebstellung (B) frei gegenüber dem Grundköper (2) verdrehbar ist.

3. Rollfalzkopf nach Anspruch 2, **dadurch gekennzeichnet, dass** der Revolverkopf (1) in der ersten Verschiebestellung (A) in einer Falzstellung steht, in welcher das Rollenpaar (16) im Betrieb eine Blechumformung ausführt, dass der Revolverkopf (9) in einer zwischen der ersten und der zweiten Verschiebestellung (A; B) liegenden mittleren Verschiebestellung (C) in einer Aus-/Einfahrstellung steht, in welcher das Rollenpaar (16) ein Werkstück (301) freigibt.

4. Rollfalzkopf nach Anspruch 2 oder 3, **dadurch gekennzeichnet, dass** die Drehmomentstütze (29) ein Sperrelement (27) und eine Aufnahme (28) umfasst, wobei entweder das Sperrelement (27) an dem Revolverkopf (9) ausgebildet ist und die Aufnahme (28) an dem Grundkörper (2) ausgebildet ist oder das Sperrelement (27) an dem Grundkörper (2) ausgebildet ist und die Aufnahme (28) an dem Revolverkopf (9) ausgebildet ist.

5. Rollfalzkopf nach wenigstens einem der vorhergehenden Ansprüche, **dadurch gekennzeichnet, dass** der Grundkörper (2) einen Führungskanal (31) umfasst und dass der Schlitten (5) in dem Führungskanal (31) geführt ist, wobei der Führungskanal (31) insbesondere als Führungstunnel (30) ausgebildet ist.

6. Rollfalzkopf nach wenigstens einem der vorhergehenden Ansprüche, **dadurch gekennzeichnet, dass** der Rollfalzkopf (1) einen Kraftsensor (33) umfasst, wobei der Kraftsensor (33) derart angeordnet ist, dass dieser eine Falzkraft aufnimmt, mit welcher die Andrückrolle (10, 11, 12, 13) ein Blech (301a) eines zu falzenden Bauteils (301) an die Gegenrolle (15) drückt.

7. Rollfalzkopf nach Anspruch 6, **dadurch gekennzeichnet, dass** der Verschiebantrieb (7) eine Kraftregeleinrichtung (7a) umfasst, wobei die Kraftregeleinrichtung (7a) derart ausgebildet ist, dass diese den Verschiebeantrieb (7) auf der Basis der von dem Kraftsensor (33) jeweils gemessenen Falzkraft kontrolliert.

8. System umfassend einen Rollfalzkopf (1) und einen Roboter (101) mit einem Roboterarm (102), wobei der Rollfalzkopf (1) an dem Roboterarm (102) befestigt ist, **dadurch gekennzeichnet, dass** der Rollfalzkopf (1) entsprechend wenigstens einem der Ansprüche 1 bis 7 ausgebildet ist.

9. Verfahren zum Betrieb eines Systems entsprechend dem Anspruch 8 mit einem Rollfalzkopf nach Anspruch 6 oder 7, - **dadurch gekennzeichnet,**
- **dass** der Kraftsensor (33) während eines Falzvorgangs wiederholt eine von der aktiven Andrückrolle (10, 11, 12, 13) auf ein zu falzendes Blech (301a) ausgeübte Falzkraft ermittelt;
- **dass** die jeweils ermittelte Falzkraft auf der Basis einer Verfahrposition des Roboters (101) einer Position an dem zu falzenden Blech (301a) zugeordnet wird, so dass ein Wertepaar erzeugt wird,
- **dass** die erzeugten Wertepaare zur Dokumentation und/oder Qualitätskontrolle und/oder Analyse gespeichert werden.

10. Verfahren nach Anspruch 9, **dadurch gekennzeichnet,**
- **dass** eine Kraftregeleinrichtung (7a) den Verschiebeantrieb (7) derart kontrolliert, dass das Blech (301a) von dem Rollfalzkopf (1) mit einer gleichbleibenden Falzkraft gefalzt wird oder
- **dass** eine Kraftregeleinrichtung (7a) den Verschiebeantrieb (7) derart kontrolliert, dass abhängig von einer Position des Rollfalzkopfes (1) an dem Blech (301a) mit einer für diese Position vorgegebenen Falzkraft auf das Blech (301a) eingewirkt wird, wobei es insbesondere vorgesehen ist, dass die Position, welche der Rollfalzkopf (1) zu dem Blech (301a) einnimmt, der Kraftregeleinrichtung (7a) von dem Roboter (101) mitgeteilt wird.

## Claims

1. Roller hemming head (1) for fastening to a robot arm (102),
- wherein the roller hemming head (1) comprises a main body (2), a first tool half (3), a second tool half (4), a carriage (5), a linear guide (6), a displacement drive (7) and a rotary drive (8),
- wherein the first tool half (3) comprises a turret head (9) and at least two pressure rollers (10-13),
- wherein the pressure rollers (10-13) are each mounted on the turret head (9) so as to be rotatable about their longitudinal axis (L10-L13),
- wherein the second tool half (4) comprises a bearing block (14) and at least one counterpart roller (15),
- wherein the at least one counterpart roller (15) is mounted on the bearing block (14) so as to be rotatable about its longitudinal axis (L15),
- wherein in each case a pressure roller (10-13) and a counterpart roller (15) are aligned with one another in such a way that a roller pair (16) for hem processing is formed,
- wherein the turret head (9) is mounted on the carriage (5) so as to be rotatable about an axis of rotation (D9),
- wherein the rotary drive (8) is mounted on the carriage (5),
- wherein the turret head (9) is rotatable by the rotary drive (8) in relation to the carriage (5) about its axis of rotation (D9),
**characterized**
- **in that** the carriage (5) is guided on the main body (2) via the linear guide (6) so as to be displaceable by the displacement drive (7) toward the axis of rotation (D9) of the turret head (9) in such a way that, in a first displacement position (A) of the turret head (9), the roller pair (16) for the hem processing is formed and, in a second displacement position (B) of the turret head (9), the pressure roller (10-13) of the roller pair (16) is at a spacing to the counterpart roller (15).

2. Roller hemming head according to Claim 1, **characterized in that** the roller hemming head (1) comprises a torque support (29), wherein the torque support (29) is designed in such a way that the turret head (9), in the first displacement position (A), is supported on the main body (2) and the turret head (9), in the second displacement position (B), is freely rotatable in relation to the main body (2).

3. Roller hemming head according to Claim 2, **characterized in that** the turret head (1), in the first displacement position (A), is in a hemming position in which the roller pair (16) executes sheet metal forming during operation, **in that** the turret head (9), in a middle displacement position (C) lying between the first and the second displacement position (A; B), is in an extension/retraction position in which the roller pair (16) releases a workpiece (301).

4. Roller hemming head according to Claim 2 or 3, **characterized in that** the torque support (29) comprises a blocking element (27) and a receptacle (28), wherein either the blocking element (27) is formed on the turret head (9) and the receptacle (28) is formed on the main body (2) or the blocking element (27) is formed on the main body (2) and the receptacle (28) is formed on the turret head (9).

5. Roller hemming head according to at least one of the preceding claims, **characterized in that** the main body (2) comprises a guide channel (31), and **in that** the carriage (5) is guided in the guide channel (31), wherein the guide channel (31) is in particular in the form of a guide tunnel (30).

6. Roller hemming head according to at least one of the preceding claims, **characterized in that** the roller hemming head (1) comprises a force sensor (33), wherein the force sensor (33) is arranged in such a way that it records a hemming force with which the pressure roller (10, 11, 12, 13) presses a metal sheet (301a) of a component (301) to be hemmed against the counterpart roller (15).

7. Roller hemming head according to Claim 6, **characterized in that** the displacement drive (7) comprises a force controlling device (7a), wherein the force controlling device (7a) is designed in such a way that it controls the displacement drive (7) on the basis of the hemming force measured in each case by the force sensor (33).

8. System comprising a roller hemming head (1) and a robot (101) having a robot arm (102), wherein the roller hemming head (1) is fastened to the robot arm (102), **characterized in that** the roller hemming head (1) is designed according to at least one of Claims 1 to 7.

9. Method for operating a system according to Claim 8 with a roller hemming head according to Claim 6 or 7, **characterized**
- **in that**, during a hemming operation, the force sensor (33) repeatedly ascertains a hemming force exerted by the active pressure roller (10, 11, 12, 13) on a metal sheet (301a) to be hemmed;
- **in that** the respectively ascertained hemming force is assigned to a position on the metal sheet (301a) to be hemmed on the basis of a movement position of the robot (101), such that a value pair is generated,
- **in that** the generated value pairs are stored for documentation and/or quality control and/or analysis.

10. Method according to Claim 9, **characterized**
- **in that** a force controlling device (7a) controls the displacement drive (7) in such a way that the metal sheet (301a) is hemmed with a constant hemming force by the roller hemming head (1), or
- **in that** a force controlling device (7a) controls the displacement drive (7) in such a way that, depending on a position of the roller hemming head (1) on the metal sheet (301a), operation is performed on the metal sheet (301a) with a hemming force that is predefined for said position, wherein it is in particular provided that the position occupied by the roller hemming head (1) with respect to the metal sheet (301a) is communicated to the force controlling device (7a) by the robot (101).

## Revendications

1. Tête de pliage à rouleaux (1) destinée à être fixée à un bras de robot (102),
- dans laquelle la tête de pliage à rouleaux (1) comprend un corps de base (2), une première moitié d'outil (3), une deuxième moitié d'outil (4), un chariot (5), un guidage linéaire (6), un dispositif d'entraînement en translation (7) et un dispositif d'entraînement en rotation (8),
- dans laquelle la première moitié d'outil (3) comprend une tourelle (9) et au moins deux rouleaux de pression (10 à 13),
- dans laquelle les rouleaux de pression (10 à 13) sont montés rotatifs respectivement autour de leur axe longitudinal (L10 à L13) sur la tourelle (9),
- dans laquelle la deuxième moitié d'outil (4) comprend un support de palier (14) et au moins un rouleau opposé (15),
- dans laquelle ledit au moins un rouleau opposé (15) est monté rotatif autour de son axe longitudinal (L15) sur le support de palier (14),
- dans laquelle respectivement un rouleau de pression (10 à 13) et un rouleau opposé (15) sont alignés l'un par rapport à l'autre de façon à former une paire de rouleaux (16) pour un usinage par pliage,
- dans laquelle la tourelle (9) est montée rotative autour d'un axe de rotation (D9) sur le chariot (5),
- dans laquelle le dispositif d'entraînement en rotation (8) est monté sur le chariot (5),
- dans laquelle l'entraînement en rotation (8) peut tourner la tourelle (9) autour de son axe de rotation (D9) par rapport au chariot (5),
**caractérisée en ce que**
- le chariot (5) est guidé en translation sur le corps de base (2) par l'intermédiaire du guidage linéaire (6) par le dispositif d'entraînement en translation (7) en direction de l'axe de rotation (D9) de la tourelle (9) de telle sorte que dans une première position de translation (A) de la tourelle (9), la paire de rouleaux (16) est formée pour l'usinage par pliage, et **en ce que** dans une deuxième position de translation (B) de la tourelle (9), le rouleau de pression (10 à 13) de la paire de rouleaux (16) est espacé par rapport au rouleau opposé (15).

2. Tête de pliage à rouleaux selon la revendication 1, **caractérisée en ce que** la tête de pliage à rouleaux (1) comprend un support de couple (29), dans laquelle le support de couple (29) est réalisé de telle sorte que la tourelle (9) dans la première position de translation (A) prend appui sur le corps de base (2) et que la tourelle (9) dans la deuxième position de translation (B) peut tourner librement par rapport au corps de base (2).

3. Tête de pliage à rouleaux selon la revendication 2, **caractérisée en ce que** la tourelle (1) dans la première position de translation (A) se trouve dans une position de pliage dans laquelle la paire de rouleaux (16) effectue en cours de fonctionnement un formage de tôle, **en ce que** la tourelle (9) dans une position de translation intermédiaire (C), située entre la première et la deuxième position de translation (A ; B), se trouve dans une position déployée/rétractée dans laquelle la paire de rouleaux (16) libère une pièce à travailler (301).

4. Tête de pliage à rouleaux selon la revendication 2 ou 3, **caractérisée en ce que** le support de couple (29) comprend un élément de verrouillage (27) et un logement (28), dans laquelle soit l'élément de verrouillage (27) est réalisé sur la tourelle (9) et le logement (28) est réalisé sur le corps de base (2), soit l'élément de verrouillage (27) est réalisé sur le corps de base (2) et le logement (28) est réalisé sur la tourelle (9).

5. Tête de pliage à rouleaux selon au moins l'une des revendications précédentes, **caractérisée en ce que** le corps de base (2) comprend un conduit de guidage (31), et **en ce que** le chariot (5) est guidé dans le conduit de guidage (31), dans laquelle le conduit de guidage (31) est réalisé en particulier sous la forme d'un tunnel de guidage (30).

6. Tête de pliage à rouleaux selon au moins l'une des revendications précédentes, **caractérisée en ce que** la tête de pliage à rouleaux (1) comprend un capteur de force (33), dans laquelle le capteur de force (33) est disposé de telle sorte qu'il absorbe une force de pliage avec laquelle le rouleau de pression (10, 11, 12, 13) presse une tôle (301a) d'un composant à plier (301) contre le rouleau opposé (15).

7. Tête de pliage à rouleaux selon la revendication 6, **caractérisée en ce que** le dispositif d'entraînement en translation (7) comprend un dispositif de régulation de force (7a), dans laquelle le dispositif de régulation de force (7a) est réalisé de telle sorte qu'il contrôle le dispositif d'entraînement en translation (7) sur la base de la force de pliage respectivement mesurée par le capteur de force (33).

8. Système, comprenant une tête de pliage à rouleaux (1) et un robot (101) pourvu d'un bras de robot (102), dans lequel la tête de pliage à rouleaux (1) est fixée au bras de robot (102), **caractérisé en ce que** la tête de pliage à rouleaux (1) est réalisée selon au moins l'une des revendications 1 à 7.

9. Procédé permettant de faire fonctionner un système selon la revendication 8 comprenant une tête de pliage à rouleaux selon la revendication 6 ou 7, **caractérisé**
- **en ce que** le capteur de force (33) établit pendant une opération de pliage de manière répétée une force de pliage exercée par le rouleau de pression actif (10, 11, 12, 13) sur une tôle à plier (301a) ;
- **en ce que** la force de pliage respectivement établie est associée à une position sur la tôle à plier (301a) sur la base d'une position de déplacement du robot (101) de façon à produire une paire de valeurs,
- **en ce que** les paires de valeurs produites sont mémorisées pour documentation et/ou contrôle qualité et/ou analyse.

10. Procédé selon la revendication 9, **caractérisé**
- **en ce qu'**un dispositif de régulation de force (7a) contrôle le dispositif d'entraînement en translation (7) de telle sorte que la tôle (301a) est pliée par la tête de pliage à rouleaux (1) avec une force de pliage constante, ou
- **en ce qu'**un dispositif de régulation de force (7a) contrôle le dispositif d'entraînement en translation (7) de telle sorte qu'en fonction d'une position de la tête de pliage à rouleaux (1) sur la tôle (301a), on agit sur la tôle (301a) avec une force de pliage prédéfinie pour cette position, dans lequel il est prévu en particulier que la position qu'occupe la tête de pliage à rouleaux (1) par rapport à la tôle (301a) soit communiquée au dispositif de régulation de force (7a) par le robot (101).
